# EUROPEAN PATENT APPLICATION

(11) **EP 3 124 531 A1**
(43) Date of publication of application: **01.02.2017**
(21) Application number: 14887323.5
(22) Date of filing: 22.12.2014
(51) Int. Cl.: C08L 9/00, B60C 1/00, C08K 3/00, C08L 7/00, C08L 23/16, C08L 23/20, C08L 23/28

(54) **RUBBER COMPOSITION AND TYRE**

(30) Priority: 26.03.2014 JP 2014063988
(71) Applicant: Bridgestone Corporation, Tokyo 104-8340 (JP)
(72) Inventor: MIURA, Takahiro, Kodaira-shi Tokyo 187-8531 (JP)
(74) Representative: Oxley, Robin John George
(86) International application number: PCT/JP2014/006397
(87) International publication number: WO 2015/145512

(57) **Abstract**

Provided is a rubber composition that has high weather resistance and crack growth resistance. The rubber composition contains a diene based rubber, a non-diene based rubber, and a reinforcing filler. In a transmission electron microscope cross-sectional image of the rubber composition, a phase domain (X) comprising the non-diene based rubber and a phase domain (Y) comprising the diene based rubber are present, and a phase domain (Y_{c}) comprising the diene based rubber is present in the phase domain (X) as a closed region that is smaller than the phase domain (X).

## Description

### CROSS-REFERENCE TO RELATED APPLICATION

The present application claims priority of Japanese Patent Application No. 2014-063988 (filed on March 26, 2014), the entire disclosure of which is incorporated herein by reference.

### TECHNICAL FIELD

The present disclosure relates to a rubber composition and a tire.

### BACKGROUND

The mode of use of tires, and in particular sidewall portions thereof, requires them to demonstrate a balance of high levels of resistance to repeated flex fatigue (high flex fatigue resistance) and weather resistance such as ozone resistance. In order to satisfy this requirement, a method has conventionally been adopted in which a blend rubber selected as appropriate from among natural rubber and conjugated diene-derived rubbers such as butadiene rubber and styrene-butadiene rubber is used as a rubber component in a rubber composition for a sidewall of a tire in order to improve flex fatigue resistance, and in which a large amount of a compounding agent such as an amine based age resistor or a paraffin based wax is combined with the rubber component in order to improve weather resistance.

However, this method suffers from a problem that the compounding agent may bloom at the surface of the tire and may turn brown when exposed to ultraviolet rays, which noticeably compromises the external appearance of the tire.

In order to combat this problem, a pneumatic tire has been proposed in which a rubber composition containing a specific ethylene-propylene-diene copolymer (EPDM) that has high ethylene content is used in an outermost layer of a sidewall portion of the tire and, as a result, crack growth resistance is improved while also obtaining high flex fatigue resistance, and deterioration of external appearance due to discoloration or the like is improved (PTL 1). Furthermore, methods have been proposed for obtaining a rubber composition that improves external appearance, weather resistance, and crack growth resistance of a tire sidewall portion, for example, by mixing in a hydrogenated styrene-conjugated diene copolymer or by preparing a master batch through kneading of a butyl rubber, a diene based rubber, a filler, and additives, and subsequently mixing and kneading a diene based rubber with the master batch (PTL 2 and 3).

### CITATION LIST

### Patent Literature

PTL 1: JP H04-43106 A
PTL 2: JP 2004-224952 A
PTL 3: JP 2005-272719 A

### SUMMARY

### (Technical Problem)

However, the specific EPDM mentioned above cannot adequately demonstrate the function thereof because the specific EPDM has low compatibility with natural rubber and rubber derived from a conjugated diene. Furthermore, there is still room for improvement of weather resistance and crack growth resistance of rubber compositions obtained by the methods described above.

Therefore, an objective of the present disclosure is to provide a rubber composition having high weather resistance and crack growth resistance. Another objective of the present disclosure is to provide a tire having excellent weather resistance and crack growth resistance in which the aforementioned rubber composition is used.

### (Solution to Problem)

The inventor conducted diligent investigation in order to achieve the objectives described above, resulting in the discovery that a rubber composition having a specific domain structure and for which inclusion of specific materials is a condition has high weather resistance and crack growth resistance.

Specifically, a rubber composition according to the present disclosure comprises a diene based rubber, a non-diene based rubber, and a reinforcing filler, wherein in a transmission electron microscope cross-sectional image of the rubber composition, a phase domain (X) comprising the non-diene based rubber and a phase domain (Y) comprising the diene based rubber are present, and a phase domain (Y_{c}) comprising the diene based rubber is present in the phase domain (X) as a closed region that is smaller than the phase domain (X). The described rubber composition has high weather resistance and crack growth resistance.

With regards to the rubber composition according to the present disclosure, the phase domain (X) comprising the non-diene based rubber and the phase domain (Y) comprising the diene based rubber are preferably each a continuous layer, and the phase domain (Y_{c}) comprising the diene based rubber is preferably present in the phase domain (X) as an island layer. The described rubber composition has higher weather resistance and crack growth resistance.

With regards to the rubber composition according to the present disclosure, the reinforcing filler is preferably contained in an amount of from 20 parts by mass to 60 parts by mass relative to 100 parts by mass of rubber components, and in the cross-sectional image, a projected area of the reinforcing filler per unit area in the phase domain (X) and the phase domain (Y_{c}) in the phase domain (X) is preferably at least 0.5 times and no greater than 2.0 times, and more preferably greater than 1.0 times and no greater than 2.0 times, a projected area of the reinforcing filler per unit area in the phase domain (Y). The described rubber composition has high flex fatigue resistance and crack growth resistance.

With regards to the rubber composition according to the present disclosure, in the cross-sectional image, in each phase domain (X) comprising the non-diene based rubber that has an area of at least 0.25 µm², phase domains (Y_{c}) comprising the diene based rubber that each have an area of from 3×10⁻³ µm² to 6×10⁻² µm² are preferably present in a number of from 5 per µm² to 130 per µm² and preferably have an area occupation percentage of from 8% to 65%. The described rubber composition has higher weather resistance and crack growth resistance.

A tire according to the present disclosure comprises the rubber composition described above adopted in one or more tire components. The one or more tire components preferably include a sidewall. The described tire has excellent weather resistance and crack growth resistance as a result of the rubber composition being used therein.

With respect to the tire according to the present disclosure, a coating layer is preferably disposed at an outer surface of at least one of the one or more tire components in which the rubber composition is adopted. The described tire has excellent weather resistance and crack growth resistance, and can be used while maintaining the external appearance thereof over a longer period of time.

### (Advantageous Effect)

According to the present disclosure, it is possible to provide a rubber composition having high weather resistance and crack growth resistance. Moreover, it is possible to provide a tire having excellent weather resistance and crack growth resistance through use of this rubber composition in one or more tire components.

### DETAILED DESCRIPTION

The following provides a detailed description of the present disclosure through illustrative embodiments.

As described above, the rubber composition according to the present disclosure contains a diene based rubber, a non-diene based rubber, and a reinforcing filler as materials.

### [Diene based rubber]

It is a condition for the rubber composition according to the present disclosure that a diene based rubber is used as a rubber component. In the present specification, the "diene based rubber" is defined as a rubber other than the non-diene based rubber described further below, and is more specifically defined as a rubber from among natural rubber and synthetic rubbers in which the proportion of diene based monomer-derived units among all constituent monomer units is greater than 5 mol%. Examples of such diene based monomers include 1,3-butadiene, isoprene, 1,3-pentadiene, and 2,3-dimethylbutadiene. On the other hand, examples of monomers other than diene based monomers (i.e., non-diene based monomers) that may form a synthetic rubber include ethylene, propylene, and isobutene. The diene based rubber may be natural rubber (NR) or a diene based synthetic rubber. Specific examples of diene based synthetic rubbers that can be used include butadiene rubber (BR), styrene-butadiene rubber (SBR), isoprene rubber (IR), and chloroprene rubber (CR). The term "diene based rubber" is also inclusive of appropriately modified products of such rubbers. From among the examples provided above, natural rubber, butadiene rubber, and/or styrene-butadiene rubber are preferable and natural rubber and/or butadiene rubber are more preferable from a viewpoint of further improving crack growth resistance of the rubber composition. It should be noted that the diene based rubber may be a single type of diene based rubber or may be a combination of two or more types of diene based rubbers.

### [Non-diene based rubber]

It is a condition for the rubber composition according to the present disclosure that a non-diene based rubber is used as a rubber component. In the present disclosure, the "non-diene based rubber" is defined as a synthetic rubber for which the proportion of diene based monomer-derived units among all constituent monomer units is no greater than 5 mol%. Examples of non-diene based rubbers that can be used include ethylene-propylene-diene rubber (EPDM), ethylene-propylene rubber (EPM), butyl rubber (IIR), chlorinated butyl rubber (Cl-IIR), and brominated butyl rubber (Br-IIR). From among the examples provided above, use of ethylene-propylene-diene rubber and/or butyl rubber is preferable and simultaneous use of both ethylene-propylene-diene rubber and butyl rubber is more preferable from a viewpoint of further improving weather resistance of the rubber composition. Furthermore, the proportion of diene based monomer-derived units among all constituent monomer units is preferably at least 0.1 mol% from a viewpoint of processability. It should be noted that the non-diene based rubber may be a single type of non-diene based rubber or may be a combination of two or more types of non-diene based rubbers.

### [Reinforcing filler]

It is a condition for the rubber composition according to the present disclosure that a reinforcing filler is used. Examples of reinforcing fillers that can be used include carbon black and silica. The carbon black is not specifically limited, and may be selected as appropriate depending on the objective. Examples of the carbon black include FEF, GPF, SRF, HAF, ISAF, and SAF. The carbon black may be one type of carbon black or may be a combination of two or more types of carbon black.

The nitrogen adsorption specific surface area (N₂SA, measured in accordance with JIS K 6217-2:2001) of the carbon black is not specifically limited, and may be selected as appropriate depending on the objective. However, from a viewpoint of providing the rubber composition with both crack growth resistance and workability, the nitrogen adsorption specific surface area (N₂SA) is preferably from 10 m²/g to 110 m²/g, and more preferably from 20 m²/g to 90 m²/g. The crack growth resistance of the resultant rubber composition can be sufficiently improved through the nitrogen adsorption specific surface area (N₂SA) of the carbon black being at least 10 m²/g, and a low loss property can be improved while maintaining good workability though the nitrogen adsorption specific surface area (N₂SA) of the carbon black being no greater than 110 m²/g.

Examples of the silica include wet silica and dry silica. The silica may be one type of silica or may be a combination of two or more types of silica. Furthermore, carbon black and silica may for example be used in combination.

The total content of the reinforcing filler relative to 100 parts by mass of rubber components is preferably from 15 parts by mass to 75 parts by mass, and more preferably from 20 parts by mass to 60 parts by mass. Crack growth resistance can be sufficiently improved while maintaining good workability through the total content of the reinforcing filler being from 20 parts by mass to 60 parts by mass.

### [Other components]

Other components besides the components described above may be used in the rubber composition according to the present disclosure as required. Examples of other components that may be included depending on the purpose thereof include crosslinking agents (vulcanizing agents), crosslinking accelerators (vulcanization accelerators), crosslinking aids (vulcanization aids), crosslinking accelerator aids (vulcanization accelerator aids), colorants, flame retardants, lubricants, foaming agents, plasticizers, processing aids, antioxidants, anti-scorch agents, ultraviolet ray protecting agents, antistatic agents, color protecting agents, and other compounding agents.

In particular, components that are suitable for obtaining the domain structure of the rubber composition according to the present disclosure are described further below.

### [Rubber composition]

A feature of the rubber composition according to the present disclosure is that in a transmission electron microscope cross-sectional image of the rubber composition, a phase domain (X) comprising the non-diene based rubber and a phase domain (Y) comprising the diene based rubber are present, and a phase domain (Y_{c}) comprising the diene based rubber is present in the phase domain (X) as a closed region that is smaller than the phase domain (X). In a situation in which a diene based rubber and a non-diene based rubber are present in a rubber matrix, the diene based rubber and the non-diene based rubber normally have a low tendency to mix with one another. Consequently, in a cross-section of a conventional rubber composition containing a diene based rubber and a non-diene based rubber, one of the rubber components (for example, the non-diene based rubber) is present in the other rubber component (for example, the diene based rubber) in a form having at least a certain area. Furthermore, a rubber composition in which there is a high degree of continuity of non-diene based rubber portions is more likely to suffer from cracking due to repeated flex fatigue or the like because cracking mainly occurs in non-diene based rubber portions. However, in the rubber composition according to the present disclosure, it is possible to reduce crack growth due to repeated flex fatigue or the like while also achieving high weather resistance because phase domains (Y_{c}) comprising the diene based rubber are formed and dispersed in phase domains (X) comprising the non-diene based rubber.

In particular, it is preferable that phase domains (X) comprising the non-diene based rubber and phase domains (Y) comprising the diene based rubber are continuous layers, and that phase domains (Y_{c}) comprising the diene based rubber are present in the phase domains (X) as island layers.

In the cross-sectional image of the rubber composition according to the present disclosure, in each phase domain (X) comprising the non-diene based rubber that has an area of at least 0.25 µm², phase domains (Y_{c}) comprising the diene based rubber that each have an area of from 3×10⁻³ µm² to 6×10⁻² µm² are preferably present in a number of from 5 per µm² to 130 per µm², and more preferably in a number of from 6 per µm² to 120 per µm², and preferably have an area occupation percentage of from 2% to 70%, and more preferably from 8% to 65%. When in each phase domain (X) of the specified area, the number and area occupation percentage of phase domains (Y_{c}) of the specified area are in the ranges described above, the rubber composition has a more favorable mixing form of the non-diene based rubber and the diene based rubber, and has even higher weather resistance and crack growth resistance.

Note that the aforementioned number and area occupation percentage are measured for the rubber composition using a transmission electron microscope cross-sectional image. Moreover, the aforementioned number and area occupation percentage are identified by randomly selecting 10 square regions in the image that each have a side length of 5 µm and by calculating an average value of measurement results for each of the measurement samples. The projected area of the reinforcing filler described below is also measured and identified in the same manner.

In the rubber composition according to the present disclosure, the reinforcing filler is preferably contained in an amount of from 20 parts by mass to 60 parts by mass relative to 100 parts by mass of rubber components, and in the cross-sectional image, a projected area of the reinforcing filler per unit area in the phase domains (X) and the phase domains (Y_{c}) in the phase domains (X) is preferably at least 0.5 times and no greater than 2.0 times, and more preferably greater than 1.0 times and no greater than 2.0 times, a projected area of the reinforcing filler per unit area in the phase domains (Y) (excluding the phase domains (Y_{c})). A reinforcing filler such as carbon black or silica is normally distributed predominately near to the diene based rubber since the reinforcing filler has high affinity with the diene based rubber. Therefore, crack growth resistance can be further improved when the relationship between reinforcing filler density in non-diene based rubber regions and diene based rubber regions is in the range described above because the reinforcing filler is more uniformly distributed throughout rubber components.

Herein, one example of a suitable method for obtaining the above-described domain structure of the rubber composition according to the present disclosure is a method in which the rubber composition is produced through:
(1) a primary process in which a master batch is prepared by kneading the non-diene based rubber and at least a portion of the reinforcing filler; and
(2) a secondary process in which the diene based rubber and any remaining reinforcing filler are added to and kneaded with the master batch.

When a rubber composition produced using a diene based rubber, a non-diene based rubber, and a reinforcing filler is produced according to a standard method in which the diene based rubber, the non-diene based rubber, and the reinforcing filler are all kneaded at once, or in which the reinforcing filler is added in a single addition at a later stage, there is a problem that the reinforcing filler tends to become distributed predominately near to the diene based rubber with which the reinforcing filler has high affinity. However, it is possible to cause the reinforcing filler to become distributed in the non-diene based rubber to a greater extent by carrying out the primary process in which a certain amount of the reinforcing filler is kneaded with the non-diene based rubber in advance. Furthermore, the diene based rubber that is subsequently mixed in the secondary process enters into the non-diene based rubber, and due to the affinity of the diene based rubber with the reinforcing filler, microdispersed phase domains of the diene based rubber are formed in the non-diene based rubber. Moreover, this method also has an effect of causing more uniform distribution of the reinforcing filler throughout rubber components.

In a situation in which the rubber composition according to the present disclosure is produced through processes (1) and (2) described above, the amount of the reinforcing filler that is mixed in the primary process relative to 100 parts by mass of rubber components is preferably from 4 parts by mass to 40 parts by mass, and more preferably from 5 parts by mass to 30 parts by mass. As a result of the amount of the reinforcing filler that is mixed in the primary process being from 4 parts by mass to 40 parts by mass relative to 100 parts by mass of rubber components, the reinforcing filler can be distributed to a greater extent in the non-diene based rubber and crack growth resistance can be sufficiently improvement without compromising workability.

Furthermore, in a situation in which the rubber composition is produced through processes (1) and (2) described above and in which carbon black is used as the reinforcing filler, it is preferable that a compound represented by any of formulae (I) to (III) shown below is also mixed.

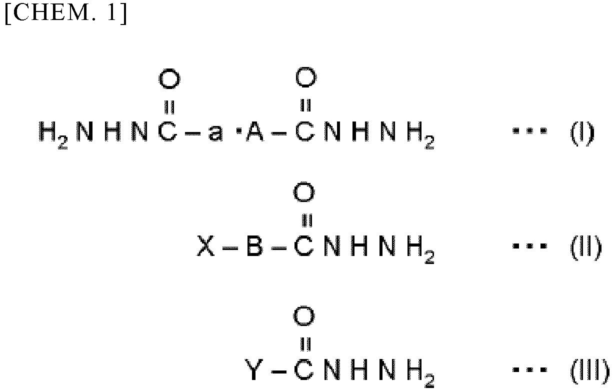

In formulae (I) to (III), A is an aromatic ring, a substituted or unsubstituted hydantoin ring, or a saturated or unsaturated straight chain hydrocarbon group having a carbon number of 1-18, a is 0 or 1, B is an aromatic group, X is a hydroxy group or an amino group, and Y is a pyridyl group or a hydrazino group. The aforementioned compound reacts with a main chain of the diene based rubber and has high affinity with carbon black. Therefore, the aforementioned compound increases the effect of entry of the diene based rubber into the non-diene based rubber, which brings about suitable formation of microdispersed phase domains of the diene based rubber in the non-diene based rubber.

The aforementioned compound is preferably added in process (2) described above.

Examples of compounds represented by formula (I) include phthalic dihydrazide, isophthalic dihydrazide, terephthalic dihydrazide, 1,3-bis(hydrazinocarboethyl)-5-isopropylhydantoin, succinic dihydrazide, adipic dihydrazide, azelaic dihydrazide, sebacic dihydrazide, eicosanedioic dihydrazide, 7,11-octadecadiene-1,18-dicarbohydrazide, and oxalic dihydrazide.

Examples of compounds represented by formula (II) include anthraniloyl hydrazine, salicylic hydrazide, 4-hydroxybenzoic hydrazide, 2-hydroxy-3-naphthoic hydrazide, and 3-hydroxy-N'-(1,3-dimethylbutylidene)-2-naphthoic hydrazide.

Examples of compounds represented by formula (III) include isonicotinic hydrazide and carbodihydrazide.

From among the compounds listed above, use of isophthalic dihydrazide, 2-hydroxy-3-naphthoic hydrazide, or 3-hydroxy-N'-(1,3-dimethylbutylidene)-2-naphthoic hydrazide is preferable from a viewpoint of improving various properties of the rubber composition. Note that any one of the above compounds may be used individually or any two or more of the above compounds may be used in combination.

In a situation in which the aforementioned compound is used, the amount of the compound that is mixed relative to 100 parts by mass of rubber components is preferably from 0.1 parts by mass to 5.0 parts by mass, and more preferably from 0.1 parts by mass to 3.0 parts by mass. As a result of the amount of the compound being from 0.1 parts by mass to 5.0 parts by mass relative to 100 parts by mass of rubber components, phase domains of the diene based rubber are suitably formed in the non-diene based rubber.

Furthermore, in a situation in which the rubber composition according to the present disclosure is produced through processes (1) and (2) described above, addition of a crosslinking agent (vulcanizing agent), and also either or both of a crosslinking accelerator (vulcanization accelerator) and a crosslinking aid (vulcanization aid) as required, is preferably performed after process (2).

Another example of a suitable method for obtaining the above-described domain structure of the rubber composition according to the present disclosure is a method in which silica used as a filler is kneaded with the non-diene based rubber in a first stage of kneading and subsequently the diene based rubber and a silane coupling agent are kneaded in a second stage of kneading.

A commonly known kneading device such as a twin screw extruder, a roller, or an intensive mixer can be used in production of the rubber composition according to the present disclosure.

No specific limitations are placed on the conditions of the primary process. Although no specific limitations are placed on the conditions of the secondary process, the secondary process is preferably performed with a maximum temperature of no higher than 145 °C. Furthermore, in a situation in which crosslinking (vulcanization) is to be performed using a crosslinking agent (vulcanizing agent), and also using a crosslinking accelerator (vulcanization accelerator), a crosslinking aid (vulcanization aid), and/or a crosslinking accelerator aid (vulcanization accelerator aid) as required, the secondary process is preferably performed at a temperature of no higher than 110°C.

### [Tire]

A tire according to the present disclosure can be produced according to a standard method without any specific limitations other than that the rubber composition according to the present disclosure is adopted in one or more tire components. The tire components in which the rubber composition is adopted are not specifically limited, and may be selected as appropriate depending on the objective. Examples of tire components in which the rubber composition can be adopted include a tread, a base tread, a sidewall, a side reinforcing rubber, and a bead filler. From among these tire components, it is preferable that the rubber composition according to the present disclosure is adopted in at least the sidewall since the sidewall is subjected to repeated flex fatigue. The tire according to the present disclosure is suitable for use as a pneumatic tire and, in particular, a passenger vehicle pneumatic tire, and has excellent weather resistance and crack growth resistance as a result of the rubber composition according to the present disclosure being used therein.

Furthermore, in the tire according to the present disclosure, a coating layer is preferably disposed at an outer surface of at least one of the one or more tire components in which the rubber composition is adopted. The described tire has excellent weather resistance and crack growth resistance regardless of whether or not a compounding agent such as an amine based age resistor or a paraffin based wax is present, and can therefore be used while maintaining the external appearance thereof over a longer period of time. No specific limitations are placed on a coating material that is used to form the coating layer, and a commonly known coating material can be selected depending on the objective.

### EXAMPLES

The following provides a more detailed description of the present disclosure through examples. However, the present disclosure is not in any way limited to the following examples.

### <Rubber composition preparation>

Rubber compositions were prepared in accordance with the formulations shown in Table 1 (each value indicates the number of parts by mass relative to 100 parts by mass of rubber components) by performing a primary process of kneading, a secondary process of kneading (kneading was only performed once in a portion of the examples), and a final process of vulcanization. The primary process was performed for 3 minutes at a temperature of 130°C and the secondary process was performed for 1.5 minutes at a temperature of 130°C. The vulcanization was performed for 15 minutes at a temperature of 160°C.

The obtained rubber compositions were subjected to various measurements as described below. The results are shown in Table 1.

### <Image evaluation>

A transmission electron microscope was used to obtain a cross-sectional image of each of the rubber compositions. Ten square regions that each had a side length of 5 µm were randomly selected in the image and a standard method was used to identify phase domains (X) comprising the non-diene based rubber, phase domains (Y) comprising the diene based rubber, and the reinforcing filler in each of the regions. Herein, in order to facilitate explanation, the term "phase domain (Y_{c1})" is used to refer to a phase domain (Y) that is present in a phase domain (X) as a closed region that is smaller than the phase domain (X) (i.e., a phase domain (Y) that is a phase domain (Y_{c})) in a situation in which the phase domain (X) has an area of at least 0.25 µm² and the phase domain (Y_{c}) has an area of from 3×10⁻³ µm² to 6×10⁻² µm². The following evaluation categories were each taken to each be an average value of values calculated for the 10 regions.
Evaluation 1: Presence of phase domains (Y_{c}) comprising diene based rubber in phase domains (X) as closed regions smaller than phase domains (X)
Evaluation 2: Number of phase domains (Y_{c1}) per 1 µm²
Evaluation 3: Area occupation percentage of phase domains (Y_{c1}) in phase domains (X) of at least 0.25 µm² in area
Evaluation 4: (Projected area of reinforcing filler per unit area in phase domains (X) and phase domains (Y_{c}) in phase domains (X)) - (Projected area of reinforcing filler per unit area in phase domains (Y) (excluding phase domains (Y_{c})))

### <Flex fatigue resistance>

A test piece having a length of 125 mm, a width of 25 mm, and a thickness of 5.5 mm was prepared for each of the rubber compositions. Repeated flexing of the test piece was performed at room temperature in accordance with JIS-K6260 (flex cracking test). The number of flexes required until a crack of at least 2 mm occurred was measured. The number of flexes was converted to an index in which the result for Comparative Example 1 had a value of 100. A higher index value indicates superior flex fatigue resistance.

### <Crack growth resistance>

An initial crack was provided in a vulcanized rubber sample having a length of 50 mm, a width of 10 mm, and a thickness of 1.0 mm. A strain of 30% was applied to the sample at 60°C, and growth (mm) of the crack was measured relative to the number of repetitions. The growth of the crack was converted to an index in which the result for Comparative Example 1 had a value of 100. A higher index value indicates superior crack growth resistance.

### <Weather resistance>

A test piece having a length of 100 mm, a width of 10 mm, and a thickness of 2 mm was prepared for each of the rubber compositions and was held in an ozone weather meter (produced by Suga Test Instruments Co., Ltd.) for 96 hours under conditions of an ozone concentration of 30 ppm and a temperature of 40°C. Thereafter, the external appearance of the rubber composition was visually observed. In the external appearance, the number of ozone cracks that had occurred was measured. The reciprocal of the number of ozone cracks was converted to an index in which the result for Comparative Example 1 had a value of 100. A higher index value indicates superior weather resistance.

**[Table 1]**

| Processes | Components | Examples | | | | | Comparative Example |
|---|---|---|---|---|---|---|---|
| | | 1 | 2 | 3 | 4 | 5 | 1 |
| Primary process | NR | 0 | 0 | 25 | 25 | 0 | 50 |
| | BR *1 | 0 | 0 | 0 | 0 | 0 | 50 |
| | BR-IIR *2 | 25 | 25 | 25 | 25 | 25 | 0 |
| | EPDM *3 | 25 | 25 | 0 | 0 | 25 | 0 |
| | Carbonblack *4 | 15 | 0 | 15 | 0 | 25 | 0 |
| | Silica *5 | 0 | 15 | 0 | 15 | 0 | 35 |
| | Stearic acid *6 | 2 | 2 | 2 | 2 | 2 | 2 |
| | Zinc oxide *7 | 2 | 2 | 2 | 2 | 2 | 2 |
| Seconder process | NR | 25 | 25 | 0 | 0 | 25 | 0 |
| | BR *1 | 25 | 25 | 25 | 25 | 25 | 0 |
| | EPDM *3 | 0 | 0 | 25 | 25 | 0 | 0 |
| | Carbon black *4 | 20 | 0 | 20 | 0 | 10 | 0 |
| | Silica *5 | 0 | 20 | 0 | 20 | 0 | 0 |
| | CB coupling agent *8 | 0.5 | 0 | 0 | 0 | 2.5 | 0 |
| | Silane coupling agent *9 | 0 | 3.5 | 0 | 0 | 0 | 0 |
| Final process | Sulfur *10 | 1.5 | 1.5 | 1.5 | 1.5 | 1.5 | 1.5 |
| | Vulcanization accelerator * 11 | 1.5 | 1.5 | 1.5 | 1.5 | 1.5 | 1.5 |
| Image evaluation | Evaluation 1 (Presence of (Y_{c})) | Yes | Yes | Yes | Yes | Yes | No |
| | Evaluation 2 (No./µm²) | 115 | 72 | 23 | 81 | 125 | - |
| | Evaluation 3 (%) | 62 | 31 | 9 | 36 | 64 | - |
| | Evaluation 4 (Projected area ratio) | 1.1 | 1.3 | 1.5 | 2.0 | 0.8 | - |
| Flex fatigue resistance | | 217 | 203 | 173 | 173 | 173 | 100 |
| Crack growth resistance | | 127 | 111 | 98 | 109 | 99 | 100 |
| Weather resistance | | 264 | 236 | 258 | 230 | 220 | 100 |

| | | | | | | | |
|---|---|---|---|---|---|---|---|
| *1 BR: Butadiene rubber (produced by JSR Corporation, BR01, diene based monomer-derived units = 100 mol%) *2 Br-IIR: Brominated butyl rubber (produced by Japan Butyl Co., Ltd., 2255) *3 EPDM: Ethylene-propylene-diene rubber (produced by JSR Corporation, EP 25, amount of third component: iodine value 17) *4 Carbon Black (produced by Tokai Carbon Co., Ltd., SEAST 300) *5 Silica (produced by Tosoh Silica Corporation, Nipsil AQ) *6 Stearic acid (vulcanization aid) (produced by New Japan Chemical Co., Ltd., 50S) *7 Zinc oxide (vulcanization accelerator aid) (produced by Hakusui Tech Co., Ltd., zinc oxide) *8 CB coupling agent: 3-hydroxy-N'-(1,3-dimethylbutylidene)-2-naphthoic hydrazide (produced by Otsuka Chemical Co., Ltd., BMH) *9 Silane coupling agent (produced by Shin-Etsu Chemical Co., Ltd., 856) *10 Sulfur (vulcanizing agent) (produced by Hosoi Chemical Industry Co., Ltd., common sulfur) *11 Vulcanization accelerator: Cyclohexylbenzothiazolesulfenamide (produced by Ouchi Shinko Chemical Industrial Co., Ltd., CZ) | | | | | | | |

The results in Table 1 demonstrate that the rubber compositions in the examples of the present disclosure, each containing the specific materials described above and having the specific domain structure described above, had high weather resistance and crack growth resistance, and also had excellent flex fatigue resistance.

## Claims

1. A rubber composition comprising:
a diene based rubber;
a non-diene based rubber; and
a reinforcing filler, wherein
in a transmission electron microscope cross-sectional image of the rubber composition, a phase domain (X) comprising the non-diene based rubber and a phase domain (Y) comprising the diene based rubber are present, and a phase domain (Y_{c}) comprising the diene based rubber is present in the phase domain (X) as a closed region that is smaller than the phase domain (X).

2. The rubber composition of claim 1, wherein
the phase domain (X) comprising the non-diene based rubber and the phase domain (Y) comprising the diene based rubber are each a continuous layer, and the phase domain (Y_{c}) comprising the diene based rubber is present in the phase domain (X) as an island layer.

3. The rubber composition of claim 2, wherein
the reinforcing filler is contained in an amount of from 20 parts by mass to 60 parts by mass relative to 100 parts by mass of rubber components, and in the cross-sectional image, a projected area of the reinforcing filler per unit area in the phase domain (X) and the phase domain (Y_{c}) in the phase domain (X) is at least 0.5 times and no greater than 2.0 times a projected area of the reinforcing filler per unit area in the phase domain (Y).

4. The rubber composition of claim 3, wherein
in the cross-sectional image, the projected area of the reinforcing filler per unit area in the phase domain (X) and the phase domain (Y_{c}) in the phase domain (X) is greater than 1.0 times and no greater than 2.0 times the projected area of the reinforcing filler per unit area in the phase domain (Y).

5. The rubber composition of claim 1, wherein
in the cross-sectional image, in each phase domain (X) comprising the non-diene based rubber that has an area of at least 0.25 µm², phase domains (Y_{c}) comprising the diene based rubber that each have an area of from 3×10⁻³ µm² to 6×10⁻² µm² are present in a number of from 5 per µm² to 130 per µm² and have an area occupation percentage of from 8% to 65%.

6. A tire comprising the rubber composition of any one of claims 1-5 adopted in one or more tire components.

7. The tire of claim 6, wherein
the one or more tire components include a sidewall.

8. The tire of claim 6 or 7, wherein
a coating layer is disposed at an outer surface of at least one of the one or more tire components in which the rubber composition is adopted.
